# EUROPEAN PATENT APPLICATION

(11) **EP 1 845 395 A1**
(43) Date of publication of application: **17.10.2007**
(21) Application number: 07251573.7
(22) Date of filing: 12.04.2007
(51) Int. Cl.: G02B 5/30

(54) **Wire-grid polarizers, methods of fabrication thereof and their use in transmissive displays**

(30) Priority: 13.04.2006 US 791816 P
(71) Applicant: E.I. du Pont de Nemours and Company, Wilmington, DE 19898 (US)
(72) Inventor: MacMaster, Steven William, Philadelphia, PA 19151 (US)
(74) Representative: Towler, Philip Dean

(57) **Abstract**

Wire-grid polarizers (WGPs) and their use in transmissive displays are disclosed. A WGP (10) comprises an array of spaced-apart, elongated elements (32), comprised of an electrically conductive and reflective material and disposed on a transparent substrate (28), wherein each element (32) of the array has a surface (24) and an opposing surface and wherein the surface (24) imparts a low reflectance to the element (32). The displays containing these WGPs possess high contrast and brightness characteristics in comparison to prior art displays.

## Description

### FIELD OF THE INVENTION

The present invention relates to wire-grid polarizers (WGPs), methods for fabrication of WGPs, and use of WGPs in transmissive displays.

### BACKGROUND OF THE INVENTION

WGPs are optical devices that serve to transmit light of a specific polarization while reflecting light of the orthogonal polarization.

The use of an array of parallel conducting wires to polarize radio waves dates back more than 110 years. Wire grids, generally in the form of an array of thin parallel conductors (unsupported or supported by a transparent substrate), have also been used as polarizers for the infrared portion of the electromagnetic spectrum.

The key factor that determines the performance of a wire grid polarizer is the relationship between the center-to-center spacing, or period, of the parallel grid elements and the wavelength of the incident radiation. If the grid spacing or period is large compared to the wavelength, the grid functions as a diffraction grating, rather than a polarizer, and diffracts both polarizations (not necessarily with equal efficiency) according to well-known principles. When the grid spacing or period is much shorter than the wavelength, the grid functions as a polarizer that reflects electromagnetic radiation polarized parallel to the grid elements, and transmits radiation of the orthogonal polarization.

The transition region, where the grid period is in the range of roughly one-half of the wavelength to twice the wavelength, is characterized by abrupt changes in the transmission and reflection characteristics of the grid. In particular, an abrupt increase in reflectance, and corresponding decrease in transmittance, for light polarized parallel to the grid elements will occur at one or more specific wavelengths at any given angle of incidence.

The effect of the angular dependence is to shift the transmission region to larger wavelengths as the angle increases. This is important when the polarizer is intended for use as a polarizing beam splitter or polarizing turning mirror.

A wire grid polarizer is comprised of a multiplicity of parallel conductive lines supported by a substrate. Such a device is characterized by the pitch or period of the conductors; the width of the individual conductors; and the thickness of the conductors. When a beam of light produced by a light source is incident on the polarizer at an angle theta from normal, with the plane of incidence orthogonal to the conductive elements, the wire grid polarizer divides this beam into a specularly reflected component, and a non-diffracted, transmitted component. For wavelengths shorter than the longest Rayleigh resonance wavelength, there will also be at least one higher-order diffracted component tangent to the polarizer. Using the normal definitions for S and P polarization, the light with S polarization has the polarization vector orthogonal to the plane of incidence, and thus parallel to the conductive elements. Conversely, light with P polarization has the polarization vector parallel to the plane of incidence and thus orthogonal to the conductive elements.

In general, a wire grid polarizer will reflect light with its electric field vector parallel to the wires of the grid, and transmit light with its electric field vector perpendicular to the wires of the grid, but the plane of incidence may or may not be perpendicular to the wires of the grid as discussed here.

Ideally, the wire grid polarizer will function as a perfect mirror for one polarization of light, such as the S polarized light, and will be perfectly transparent for the other polarization, such as the P polarized light. In practice, however, even the most reflective metals used as mirrors absorb some fraction of the incident light and reflect only 90% to 95%, and plain glass does not transmit 100% of the incident light due to surface reflections.

Wire-grid polarizers have been developed that are operable in the visible and near-visible spectrum of electromagnetic radiation or light to generally decouple the two orthogonal polarizations of the light. Such wire-grid polarizers are useful in-optical systems such as image display systems and image projections systems.

### SUMMARY OF THE INVENTION

The invention provides a polarizer device, such as a wire grid polarizer, for generally decoupling two orthogonal polarizations of electromagnetic waves of wavelengths within the range of ultraviolet, visible and infra-red, such as visible light. Furthermore, the invention provides a wire-grid polarizer that is useful in a transmissive liquid crystal display to impart high contrast and brightness characteristics to the display. The elements can be sized to interact with electromagnetic waves of visible light to generally transmit electromagnetic waves of one polarization, and generally reflect electromagnetic waves of another polarization.

In one embodiment, the invention is a wire grid polarizer, comprising:
a) a transparent substrate having an optical property of transmitting electromagnetic waves having a wavelength within the range of ultraviolet, visible and infra-red;
b) an array of spaced-apart, elongated elements, comprised of an electrically conductive and reflective material and disposed on the substrate, sized to interact with electromagnetic waves having a wavelength within the range of ultraviolet, visible and infra-red to generally transmit electromagnetic waves of a first polarization, and generally reflect electromagnetic waves of a second polarization;
wherein each element of the array has a surface and an opposing surface and wherein the surface possesses low reflectance.

In another embodiment, the invention is a transmissive display comprising:
a) a light source having a reflective optical cavity configured to randomize direction and polarization of light reflected by the optical cavity;
b) a display module; and
c) a wire grid polarizer device placed between the light source and the display module, comprising:
   1) a transparent substrate having an optical property of transmitting electromagnetic waves having a wavelength within the range of ultraviolet, visible and infra-red;
   2) an array of spaced-apart, elongated elements, comprised of an electrically conductive and reflective material and disposed on the substrate, sized to interact with electromagnetic waves having a wavelength within the range of ultraviolet, visible and infra-red to generally transmit electromagnetic waves of a first polarization, and generally reflect electromagnetic waves of a second polarization;
wherein each element of the array has a surface and an opposing surface and wherein the surface possesses low reflectance; and
wherein the surface is nearer the display module than the opposing surface. In various embodiments, the light source is capable of producing visible, ultraviolet, and/or infra-red light, and the material of the elements is reflective to visible, ultraviolet, and/or infra-red light, respectively (i.e., material is reflective to light being produced by the light source when being operated). Additional features and advantages of the invention will be apparent from the detailed description which follows, taken in conjunction with the accompanying drawings, which together illustrate, by way of example, features of the invention.

### BRIEF DESCRIPTION OF THE DRAWINGS

FIG. 1 is a cross-sectional end view of a wire-grid polarizer in accordance with an embodiment of the present invention.
FIG. 2 is a perspective view of a cross-sectional view of the wire-grid polarizer of FIG. 1.
FIG. 3 is a cross-sectional end view of a wire-grid polarizer in accordance with another embodiment of the present invention.
FIG. 4 is a perspective view of a cross-sectional view of the wire-grid polarizer of FIG. 4
FIG. 5 is a cross-sectional end view of a wire-grid polarizer in accordance with yet another embodiment of the present invention.
FIG. 6 is a perspective view of a cross-sectional view of the wire-grid polarizer of FIG. 5.
FIG. 7 is a cross-sectional end view of a wire-grid polarizer in accordance with still another embodiment of the present invention.
FIG. 8 illustrates one embodiment of a transmissive liquid crystal display according to the invention.
FIG. 9 illustrates another embodiment of a transmissive liquid crystal display according to the invention.

### DETAILED DESCRIPTION

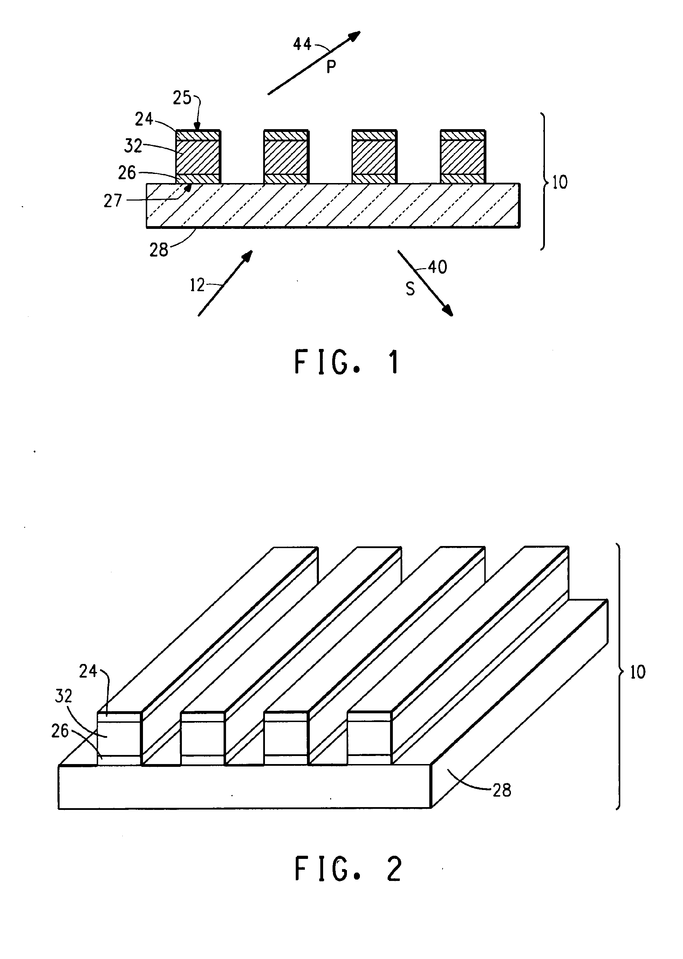

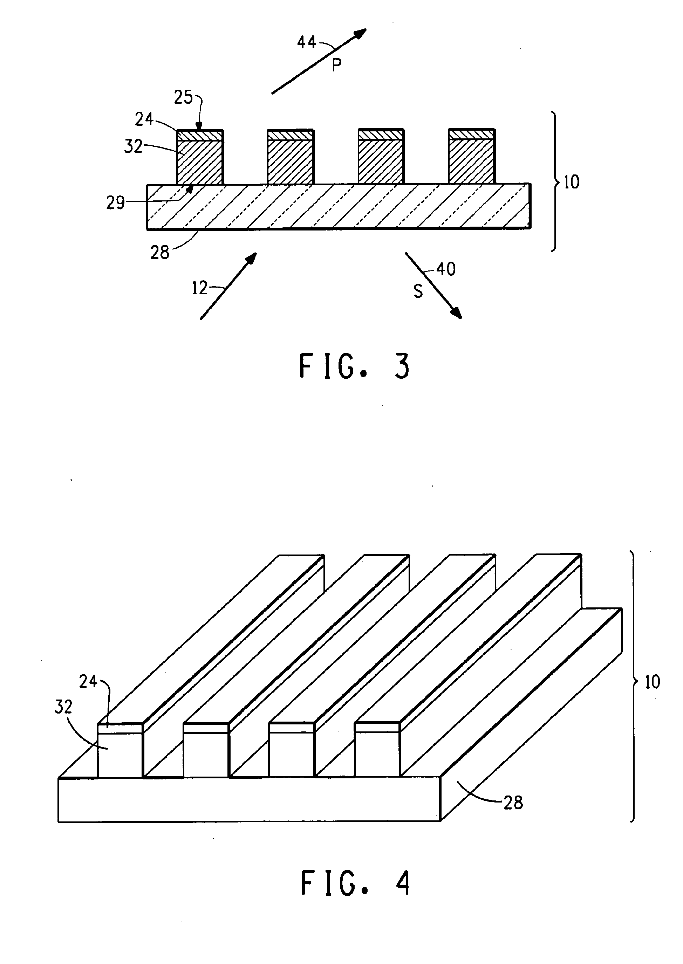

Illustrated in FIGS. 1 and 2 and also in FIGS. 3 and 4, a polarizing device, indicated generally as 10, such as a wire-grid polarizer, in accordance with the present invention is shown for generally decoupling two orthogonal polarizations of a beam of electromagnetic waves, indicated generally as 12. In one aspect the beam 12 of electromagnetic waves can include visible light. As discussed in greater detail below, the polarizing device (e.g., wire-grid polarizer) 10 advantageously includes a layer 24 that possesses low reflectivity and which does not adversely affect the optical properties of the polarizing device 10. Such polarizing device (e.g., wire-grid polarizer) may be used in various applications, such as image displays (monitors, flat panel displays, LCDs, etc.), image projectors, optical trains, scientific and medical instruments, etc.

The polarizing device 10 may include a substrate 28, which may have its own optical function. The substrate 28, for example, could be a quarter wave-plate (as described in JP2005-195824A) in addition to being a substrate. The substrate 28 may be transparent to the electromagnetic waves of electromagnetic radiation (e.g., visible light) so that the electromagnetic waves of electromagnetic radiation (e.g., visible light) can be transmitted by, or pass through, the substrate. Thus, the substrate 28 may have an optical property of transmitting the electromagnetic waves of electromagnetic radiation (e.g., visible light). In one aspect, the substrate 28 may transmit the electromagnetic waves of electromagnetic radiation without otherwise altering it, such as, without changing the phase, angle, etc. The substrate 28 may include, or be formed by, a glass material or a polymeric material. It will be appreciated that other materials, such as quartz, etc. may be used. Suitable polymeric materials include, but are not limited to, polymethylmethacrylate (PMMA), polycarbonate (PC), polystyrene (PS), polyethylene terephthalate (PET), polyethylene naphthalate (PEN), diethylene glycol bis carbonate (CR-39), styrene/acrylonitrile copolymer (SAN), styrene/methacrylic acid copolymer (MS), alicylcic acrylic resin and alicyclic polyolefin resin.

In addition, the polarizing device 10 may include an array of a plurality of spaced-apart, elongated elements 32. The elements 32 may be both reflective to light and electrically conductive, and may be disposed on or supported by a surface of the substrate 28. The elements 32 may be formed from a conductive material. For example, the elements can include, but are not limited to metals, such as aluminum, chromium or silver, as well as various conducting polymers (provided the conducting polymers are reflective to light of the type the polarizing device is polarizing, e.g., visible light for use in visible displays). It will be appreciated that other structures, materials, or layers can be disposed between the elements 32 and the substrate 28, including for example, ribs, gaps, grooves, layers, films, etc. In addition, a region may be formed between the elements and the substrate with a low refractive index (or a refractive index lower than a refractive index of the substrate), and a controlled thickness. The low index region separating the elements from the substrate can shift the longest wavelength resonance point to a shorter wavelength, and can reduce the fraction of P polarized electromagnetic waves or light that is reflected from the polarizer. Spaces between adjacent elements 32 can be occupied by air, substrate material, or some other material.

The elements 32 are relatively long and thin. All or most of the elements 32 may have a length that is generally larger than the wavelength of the desired electromagnetic waves (e.g., electromagnetic waves of visible light). Thus, the elements 32 have a length of at least approximately 0.7 µm (micrometer or micron) for visible light applications. The typical length, however, may be much larger. The length of the elements 32 do not have to span the length of the substrate 28 as shown in Figures 2,4, and 6. The elements 32 may have a thickness or a height t less than the wavelength of the desired electromagnetic waves of electromagnetic radiation (e.g., light), or typically less than 0.4 µm (micrometer or micron) for visible light applications. In one aspect, the thickness may be less than 0.2 µm for visible light applications. In embodiments where the elements 32 are metallic, the elements 32 may be comprised of a single layer of a metal (e.g., aluminum), a single layer of a mixture of metals or an alloy (e.g., mixture of aluminum and silver or aluminum and chromium), and/or two or more layers of metals (e.g., a layer of aluminum and a layer of chromium). As illustrated in Figures 1 and 3, the total thickness tₜ of the bonded element 32, the layer 24, and the optional layer 26 is the sum of the thickness t of an element 32 plus the thicknesses of layer 24 and layer 26, if present, which is the distance that outer surface of layer 24 is from the substrate 28.

Having the elements 32 be comprised of two or more layers in this invention is advantageous in alleviating or overcoming refractive index mismatch(es) between or among layer(s). As one example, there is a refractive index mismatch when elements 32 are aluminum and layer 24 is chromium oxide. This mismatch can be substantially corrected by having the elements 32 be two layers - one of aluminum and one of chromium, such that the chromium layer of elements 32 is sandwiched between the aluminum layer of elements 32 and the chromium oxide layer 24 in the polarizing device 10.

In addition, the elements 32 are located in generally parallel arrangement with a spacing, pitch, or period P of the elements being smaller than the wavelength of the desired electromagnetic waves of electromagnetic radiation (e.g., visible light). Thus, the elements 32 typically have a pitch P of less than 0.4 µm (micrometer or micron) for visible light applications. In one aspect, the pitch P may be approximately one-half the wavelength of light, or approximately 0.15 - 0.2 µm for visible light applications where the shortest wavelength of the visible light is approximately 370 nm. In one embodiment, the pitch P is 0.15 µm. The elements 32 also may have a width w less than the period P, or typically less than 0.4 µm or 0.2 µm for visible light applications. In one aspect, the width may be less than 0.1-0.2 µm for visible light applications. It should be noted that arrays with longer periods (greater than approximately twice the wavelength of light or 1.4 µm) can operate as diffraction gratings, while arrays with shorter periods (less than approximately half the wavelength of light or 0.2 µm) operate as polarizers, while arrays with periods in a transition region (between approximately 0.2 and 1.4 µm) also act as diffraction gratings and are characterized by abrupt changes or anomalies referred to as resonances. Thus, it will be appreciated that the actual size of the elements 32 is quite small, and the array of elements 32 can actually appear as a continuous, reflective surface to the unaided eye. As shown in the figures, however, the array of elements 32 actually creates a very small structure, or nano-structure with a size or scale on the order of 10⁻⁸ meters.

In addition, the size and configuration of the array of elements 32 is designed to interact with the electromagnetic waves of electromagnetic radiation (e.g., visible light) to generally transmit electromagnetic waves of one polarization, and generally reflect electromagnetic waves of another polarization. As stated above, a beam 12 can be incident on the polarizer device 10. The polarizer device 10 can divide the beam 12 into a reflected component 40, and a non-diffracted, transmitted component 44. Using the normal definitions for S and P polarization, the electromagnetic wave or light with S polarization has the polarization vector orthogonal to the plane of incidence, and thus parallel to the conductive elements. Conversely, the electromagnetic wave or-light with P polarization has the polarization vector parallel to the plane of incidence and thus orthogonal to the conductive elements.

In general, the polarizer device 10 can reflect waves of electromagnetic radiation (e.g. visible light) with their electric field vectors parallel to the elements 32 (or the S polarization), and transmit waves of electromagnetic radiation (e.g., visible light) with their electric field vectors perpendicular to the elements (or the P polarization). Ideally, the polarizer device can function as a perfect mirror for one polarization of electromagnetic radiation, such as the S polarized light, and can be perfectly transparent for the other polarization, such as the P polarized light. In practice, however, even the most reflective metals used as mirrors absorb some fraction of the incident light and reflect only 90% to 95%, and neither typical polymeric materials nor plain glass transmits 100% of the incident light due to surface reflections.

A key aspect of the present invention is that there is a layer 24 (having an outer surface 25) comprised of material having low reflectivity present on the elements 32 that imparts low reflectivity characteristics to the polarizer device with respect to incident electromagnetic radiation as shown in Figure 1. In an embodiment as shown in Figure 1, the layer 24 is on an opposing side relative to the substrate 28 side of the elements 32. This low-reflectivity layer 24 may comprise, but is not limited to, various metal oxide layers, such as chromium oxide.

There are two principal ways to achieve low reflection on the surface of a highly reflective metal that are useful in obtaining the layer 24 according to the invention. One is by using a light absorbing material on the surface and the other is using interferometric means. Light absorbing materials (e.g., black paint or carbon black) can be employed using processes (e.g., evaporation or sputtering) that leave one or more sides of the WGP elements 32 uncoated with these materials or using a coating/patterning/etching process to selectively apply these materials to desired surfaces of the WGP elements 32. The second way is interferimetrically. In this way, again the process to apply can be the same as described above except that the material is specifically suited forevaporative deposition and can be applied in any WGP fabrication technique. These materials are generally transparent to visible wavelengths. What is important is that the thickness and refractive index must be paired (not matched) with the reflective metal to form the light absorbing function. In this case, it is important to remember that, although metals are highly reflective, they are also perfect absorbers. The thickness and index will eliminate reflection in the same way that an antireflective (AR) coating works, which entails destructive interference in a back direction or at an interface where reflection is not desired.

The thickness of the layer 24 may be in the range from about 300 angstroms to about 700 angstroms. In one embodiment, the thickness of the layer 24 is the range from about 500 angstroms to about 600 angstroms using chromium oxide (having refractive index n of 2.25) as the layer 24 material for application in WGPs for visible displays operating with 500-600 nm visible light. If the thickness is less than about 300 angstroms, the layer is too thin to afford suitably low reflectivity characteristics at its surface. If the thickness is greater than about 700 angstroms, the layer is too thick such that it imparts deleterious optical characteristics to the polarizer. In one embodiment, the layer 24 is comprised of a monlayer of material that is characterized to be of low reflectivity and to be non-birefringent.

For certain materials having suitable properties, layer 24 may be a continuous layer across the surface of the substrate. For example, when layer 24 is chromium oxide (Cr₂O₃), this layer may be continuous for most display applications since chromium oxide is approximately 90% transmissive to visible light at ¼ wave optical thickness. An example of a material where layer 24 cannot be continuous is black paint, which would essentially absorb most or all light.

As shown in Figures 1 and 2, the polarizer device of this invention may optionally also include a layer 26 having a surface 27 in contact with or proximate to the substrate 28. If present, it is preferred that layer 26 be comprised of a material that imparts high reflectivity to the surface 27. Layer 26 can be comprised of a material that imparts high reflectivity to the surface 27 and also afford other desirable characteristics (e.g., afford good adhesion characteristics in bonding the elements 32 to the substrate 14).

Figures 3 and 4 illustrate an embodiment of the invention that does not have a separate layer between an element 32 and the substrate 28. In this case, the element 32 is in direct contact with the substrate or is proximate to the substrate.

In addition, the layer 24 advantageously is chemically bonded to, or reacts with, the elements 32, or to a natural oxide layer 48 on the elements, so that the layer covers some exposed surfaces of the elements (the exposed surfaces being those not contacting the substrate). It is believed that the chemical bond of the layer 24 to the elements 32 permits the layer to be relatively thin, and contributes to the layer's ability to resist corrosion. Again, the chemical bond formed only with the elements 32 is believed to be another reason why the layer 24 does not affect the optical properties of the polarizer device 10 for the embodiments illustrated in Figures 1-4.

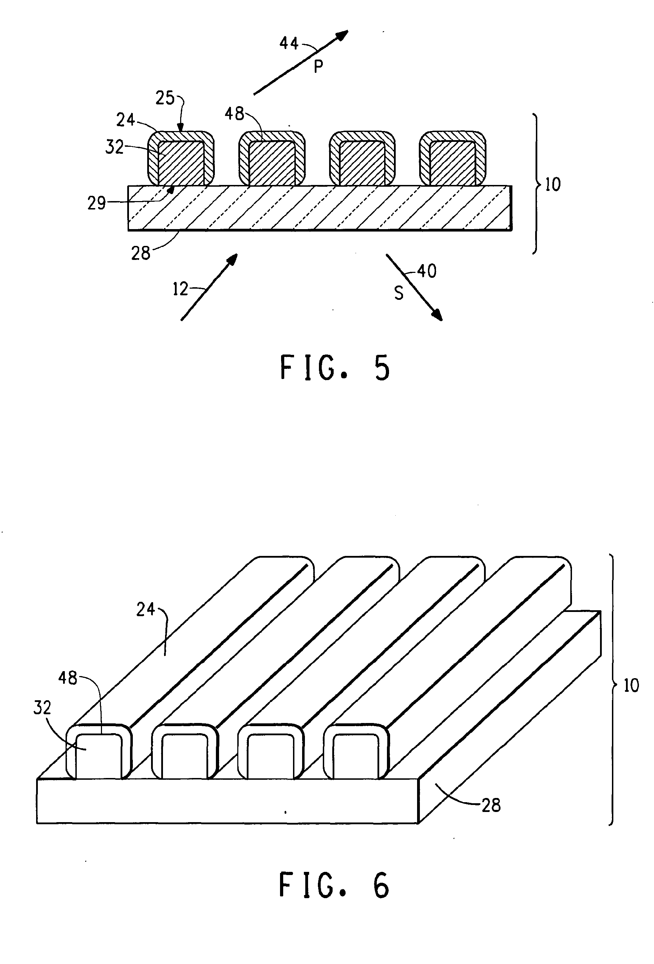

Figures 5 and 6 illustrate yet another embodiment of the invention in which all exposed sides 48 of the bare elements 32 are covered with a layer 24 of material having low reflectivity. The unexposed sides 29 of the elements 32 that are in contact or proximate to the substrate 28 are not covered with layer 24 material. Layer 24 is typically comprised of material having low reflectivity and preferably will have other desirable properties, such as being a corrosion inhibitor of metals (e.g., protecting conductive elements 32 against corrosion).

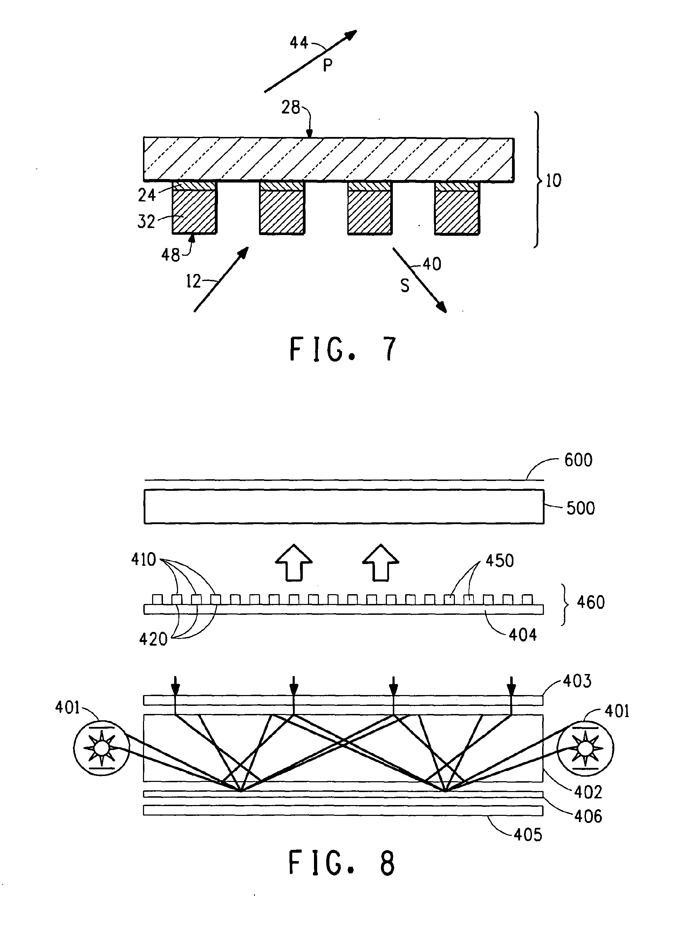

Figure 7 illustrates still another embodiment of the invention for a polarizer. In this embodiment, the layer 24 of material having low reflectivity is sandwiched between the elements 32 and the substrate 28. The outer surface 48 of element 32 in this embodiment is the conductive material of element 32, which normally possesses high reflectivity. For certain materials having suitable properties, layer 24 may be a continuous layer across the surface of the substrate. For example, when layer 24 is chromium oxide (Cr₂O₃), this layer may be continuous for most display applications since chromium oxide is approximately 90% transmissive to visible light at ¼ wave optical thickness. An example of a material where layer 24 cannot be continuous is black paint, which would essentially absorb most or all light.

In one embodiment of a polarizing device (e.g., wire grid polarizer) according to the invention, elements 32 are made to contain a layer 24 of low reflectivity material opposite the substrate side of the elements 32 and then all three exposed sides (3 sides not including the substrate side) are coated with a secondary coating to protect the elements 32 against corrosion and other adverse effects. Suitable secondary coatings include, but are not limited to, a polymer coating (e.g, polyethylene terephthalate) or a coating of pressure-sensitive adhesive (PSA).

### Polarizing Device as a Component in Transmissive Displays

The polarizing devices (e.g., wire-grid polarizers) of this invention are useful in transmissive displays and afford both high contrast and brightness for the displays in comparison to prior art displays when operated at comparable power levels. The wire-grid polarizers (WGPs) of this invention act as recycling polarizers in that they both polarize light that is incident upon them and recycle light back toward the light guide that is of the wrong polarity to be transmitted through the WGPs. Consequently, the transmissive displays of this invention can utilize and contain a single WGP that replaces one or the other or both of a conventional recycling polarizer (e.g., dual brightness enhancement film from 3M) and the rear polarizer of a conventional LCD display.

Figure 8 illustrates one embodiment of a transmissive liquid crystal display according to the invention. This display contains a polarizing device 460 comprised of a substrate, shown as 404 in this figure and elements, shown here as 450. The elements shown here can correspond to any of the embodiments discussed supra and shown in Figures 1-6 as elements 32, and associated layers 24 and 26. As illustrated in the figure, the transmissive LCD display also includes a light source 401 that emits non-polarized light; a light guide 402 that converts the linear light emitted from the aforementioned light source into uniform plane light, an optional diffusing plate 403 that is positioned at the upper part of the light guide and which scatters light, and a reflector 405, which reflects light incident upon it. Optionally this display can include a Faraday rotator 406 (shown in the figure) to rotate the plane of polarization of light as described in Korean Laid-Open Patent No. 10-2004-0075430. Additional components of this display as shown in Figure 8 include an LCD panel 500 and a front polarizing plate 600. In this embodiment, the surfaces 410 of all elements 450 facing toward the LCD panel 500 are surfaces that are of low reflectivity. The surfaces 420 may possess either high or low reflectivity.

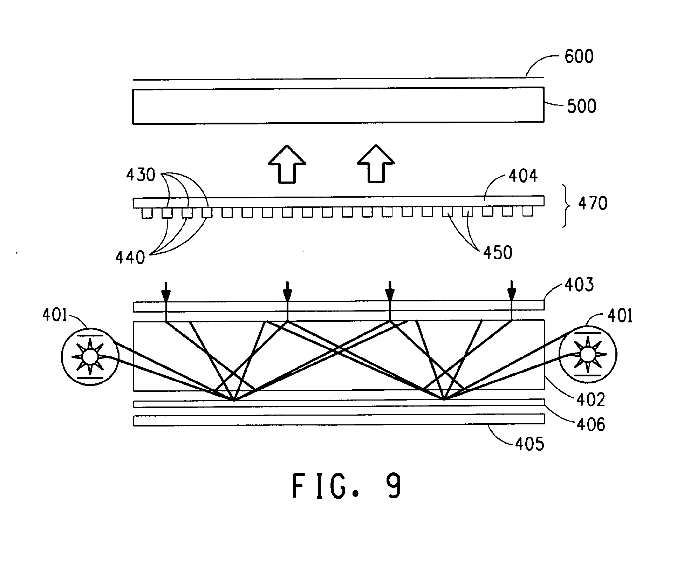

Figure 9 illustrates another embodiment of a transmissive liquid crystal display according to the invention. This embodiment is the same as that illustrated in Figure 8 except for the characteristics and placement of the wire grid polarizer 470. In this embodiment, the substrate 404 is closer to the LCD panel 500 than are the elements 450. The surfaces 430 of the elements 450 that are proximate to or in contact with the substrate 404 possess low reflectivity, while the opposing surfaces 440 can possess either high or low reflectivity. Preferably, the opposing surfaces 440 possess high reflectivity. As shown in Figure 9 in comparison to Figure 8, the positioning of the polarizing device 470 is rotated 180 degrees and the high and low reflection surfaces switched relative to the positioning of the similar polarizing device 460 in Figure 8. For this embodiment as shown in Figure 9, the substrate 404 should be composed of a non-birefringent material a "controlled birefringent" material, such as composition or Fuji wide view film, controlled optical substrate, or substrate with optical properties. (Even a linear polarizer is birefringent.)

In yet another embodiment of a display according to the invention, a polarizing element (e.g., wire-grid polarizer) is assembled directly on a side of a light guide that will be the front side in a transmissive display. In this embodiment, there is no substrate layer(s). This polarizing element can serve to function both as a recycling polarizer and a rear polarizer and does not have a substrate layer. Hence it can have two fewer layers in relation to a conventional transmissive display that has both a recycling polarizer and a rear polarizer.

In one embodiment, a transmissive display of the invention is one having a polarizer device (e.g., wire grid polarizer) in direct contact with a liquid crystal display cell, which contact serves to protect the elements of the polarizer device from corrosion. As one specific case of this embodiment, the polarizer device may be laminated to the LCD cell to afford the transmissive display.

In a related embodiment, a polarizer device (e.g., wire grid polarizer) is placed inside of a liquid crystal display cell.

| Glossary | |
|---|---|
| Surface of low reflectance - | A surface having low reflectance according to the invention is one having a measured reflectance typically less than 0.35 in one embodiment, less than 0.25 in another embodiment, and less than 0.15 in yet another embodiment, with each reflectance having been measured with non-polarized light of wavelength λ lying in the region (e.g., visible, ultraviolet, or infra-red) of the electromagnetic spectrum of interest. |
| Surface of high reflectance - | A surface having high reflectance according to the invention is one having a measured reflectance typically greater than 0.70 in one embodiment, greater than 0.80 in another embodiment, and greater than 0.90 in yet another embodiment, with each reflectance having been measured with non-polarized light of wavelength λ lying in the region (e.g., visible, ultraviolet, or |
| | infra-red) of the electromagnetic spectrum of interest. |
| Reflective optical cavity - | As used herein, this term can include several components in conventional displays, including, but not limited to, a light guide and a reflective layer proximate to a light guide. |
| Geometric structured - surface material | A non-limiting example of this material is a prismatic film added to a display to redirect light towards the display front and thereby increase brightness of the display. Prismatic films are commercially available; an example is brightness enhancement film (BEF) available from 3M Corp. St. Paul, MN. |

### Examples

### Example 1

This sample was made by spin-coating a mixture of one-third Microposit^{®} Type P Thinner (Rohm and Haas Electronic Materials, LLC, Marlborough, MA) and two-third Microposit^{®} S1805 Positive Photoresist (Rohm and Haas Electronic Materials, LLC, Marlborough, MA) onto a 152mm x100mm x 2mm thick piece of soda-lime glass for 30 seconds at 3500 RPM. The plate was then dried on a hotplate at 100°C for 15 minutes. The plate was placed into a Lloyd's mirror set-up at 56° incident. The plate was exposed using the 364.8 nm line from a Coherent Argon Sabre Laser (Coherent, Inc., Santa Clara, CA) for 30 seconds to form an interference sinusoidal interference pattern with a period of 220 nm peak to peak. The sample was then developed in a mixture of 4 parts deionized water and one part Microposit^{®} 351 Developer (Rohm and Haas Electronic Materials, LLC, Marlborough, MA) for 20 seconds, rinsed with deionized water for 10 seconds, and dried with forced air. The developed plate was then exposed to 254 nm UV light (UVP, Upland, CA) for one hour and placed in a 110°C oven overnight. The plate was placed into a Denton e-gun Evaporator (Denton Vacuum, Moorestown, NJ) on a hanger making a 56° angle with the source whereby 800 angstroms of chromium followed by 500 angstroms of chromium oxide were deposited onto the exposed edge of the sinusoidal pattern. The sample was measured for transmission, reflection, and color with a HunterLab UltraScan XE (HunterLab, Reston, VA). The sample was then measured in transmission parallel and crossed with an identical sample made at the same time with the same process conditions. The data were then used to calculate polarization efficiency and extinction ratio for the WGP on glass that was produced. The results are detailed in Table 1. As shown in Table, this WGP on glass exhibited high polarization efficiency and low back reflection characteristics. As the results in Table 1 indicate, back reflection (both total and specular) for the inventive sample of Example 1 is comparable with that for an incumbent dichroic polarizer (i.e., the Nitto polarizer) and much better than the back reflection for a prior art wire grid polarizer (Moxtek) or for DBEF (dual brightness enhancement film from 3M Corp. St. Paul, MN).

### Example 2

This sample was made by spin-coating a mixture of one-third Microposit^{®} Type P Thinner (Rohm and Haas Electronic Materials, LLC, Marlborough, MA) and two-third Microposit^{®} S1805 Positive Photoresist (Rohm and Haas Electronic Materials, LLC, Marlborough, MA) onto a piece of 200 gauge Melinex^{®} 455 polyethylene terephthalate (PET, DuPont Teijin Films, Hopewell, VA) taped on all four sides down to a 152mm x100mm x 2mm thick piece of soda-lime glass for 30 seconds at 3500 RPM. The plate was then dried on a hotplate at 100°C for 15 minutes. The plate was placed into a Lloyd's mirror set-up at 56° incident. The plate was exposed using the 364.8 nm line from a Coherent Argon Sabre Laser (Coherent, Inc., Santa Clara, CA) for 30 seconds to form an interference sinusoidal interference pattern with a period of 220 nm peak to peak. The sample was then developed in a mixture of 4 parts deionized water and one part Microposit^{®} 351 Developer (Rohm and Haas Electronic Materials, LLC, Marlborough, MA) for 20 seconds, rinsed with deionized water for 10 seconds, and dried with forced air. The developed plate was then exposed to 254 nm UV light (UVP, Upland, CA) for one hour and placed in a 110°C oven overnight. The plate was placed into a Denton e-gun Evaporator (Denton Vacuum, Moorestown, NJ) on a hanger making a 56° angle with the source whereby 800 angstroms of chromium followed by 500 angstroms of chromium oxide were deposited onto the exposed edge of the sinusoidal pattern. The sample was removed from the glass and measured for transmission, reflection, and color with a HunterLab UltraScan XE (HunterLab, Reston, VA) with light incident on the Melinex^{®} side of the sample. The sample was then measured in transmission parallel and crossed with an identical sample made at the same time with the same process conditions but held with the pattern sides to one another. The data were then used to calculate polarization efficiency and extinction ratio for the WGP on PET that was produced. The results are detailed in Table 1. As shown in Table 1, this WGP on PET exhibited high polarization efficiency and low back reflection characteristics. As the results in Table 1 indicate, back reflection (both total and specular) for the inventive sample of Example 2 is comparable with that for an incumbent dichroic polarizer (i.e., the Nitto polarizer) and much better than the back reflection for a prior art wire grid polarizer (Moxtek) or for DBEF (dual brightness enhancement film from 3M Corp. St. Paul, MN).

| TABLE 1 | | | | | |
|---|---|---|---|---|---|
| | **3M DBEF** | **Moxtek WPG on Glass** | **NPF HEG1425DU Nitto Polarizer** | **Example 1 on Glass** | **Example 2 on PET** |
| **Tvis (single)** | 46.44 | 45.28 | 42.71 | 38.17 | 26.5 |
| **Tvis (Parallel)** | 40.35 | 40.98 | 37.55 | 31.05 | 18 |
| **Tvis (Crossed)** | 4.56 | 0.79 | 0.02 | 0.95 | 1.14 |
| | | | | | |
| **Efficiency** | 89.3% | 98.1% | 99.9% | 97.0% | 93.9% |
| **Extinction Ratio** | 10 | 57 | 21.36 | 40 | 23 |
| | | | | | |
| **L** | 73.83 | 73.08 | 71.36 | 45.87 | 31.56 |
| **a*** | 4.39 | -0.51 | -1.2 | 3.22 | 1.19 |
| **b*** | -3.72 | 1.17 | 4.23 | 7.53 | 12.15 |

| **Back Reflection** | | | | | |
|---|---|---|---|---|---|
| **Total** | 47.03 | 46.5 | 13.3 | 15.9 | 26.89 |
| **Specular** | 39.25 | 37.39 | 6.1 | 4.22 | 12.73 |

The columns in Table 1 are labeled for the above-described patent examples as well as
3M's DBEF purchased from 3M (St. Paul, MN), a commercial Moxtek wire-grid polarizer purchased from Edmund Scientific (Barrington, NJ), and a Nitto NPF polarizer purchased from Nitto Denko (Shatin, N.T., Hong Kong).

Tvis(single) is a total transmission measurement across the visible spectrum of a single polarizer and is reported as a percentage of incident. Tvis(parallel) is a total transmission measurement across the visible spectrum of two like polarizers whose polarization axes are parallel and is reported as a percentage of incident on the first. Tvis(crossed) is a total transmission measurement across the visible spectrum of two like polarizers whose polarization axes are orthogonal (90°) and is reported as a percentage of incident on the first.

The efficiency ratio is the square root of ([Tvis(parallel) - Tvis(crossed)] / [Tvis(parallel) + Tvis(crossed)]) and reported as percentage. The extension ratio is the ratio of Tvis(single) to Tvis(crossed) and rounded to the nearest whole number.

CIE 1976 L a* b* is a three-dimensional color space defining lightness (L), a blue to yellow hue (a*), and a red to green hue. The value of lightness, L, ranges from 0 to 100 with a value of 100 defining white and a value of 0 defining black. The hues tending yellow to blue, a*, are on a scale of-100 to +100 with saturated yellow having a value of +100 and saturated blue having a value of-100 for the a* value. The hues tending red to green, b*, are on a scale of -100 to +100 with saturated red having a value of +100 and saturated green having a value of -100 for the b* value.

Back reflection is a measurement of reflected visible light from the front surface of the sample. The total back reflection is the percentage of incident light reflected from the front surface into any direction. The specular reflection is the percentage of incident light reflected from the front surface reflected in the specular direction which is the direction of equal but negative angular direction as the incident light, θ(specular) = - θ(incident).

## Claims

1. A wire grid polarizer, comprising:
a) a transparent substrate having an optical property of transmitting electromagnetic waves having a wavelength within the range of ultraviolet, visible and infra-red;
b) an array of spaced-apart, elongated elements, comprised of an electrically conductive and reflective material and disposed on the substrate, sized to interact with electromagnetic waves having a wavelength within the range of ultraviolet, visible and infra-red to generally transmit electromagnetic waves of a first polarization, and generally reflect electromagnetic waves of a second polarization;
wherein each element of the array has a surface and an opposing surface and wherein the surface possesses low reflectance.

2. The wire grid polarizer of Claim 1 wherein the opposing surface possesses high reflectance.

3. The wire grid polarizer of Claim 1 or Claim 2 wherein the array interacts with electromagnetic waves having a wavelength in the visible region.

4. The wire grid polarizer of any of Claims 1 to 3 wherein the surface of the element has a reflectance that is less than 0.35.

5. The wire grid polarizer of any of Claims 1 to 4 wherein the opposing surface of the element has a reflectance that is greater than 0.70.

6. The wire grid polarizer of any of Claims 1 to 5 wherein the surface of each element of the array is an outer surface and possesses low reflectance and the opposing surface of each element of the array possesses high reflectance and is an inner surface proximate to the transparent substrate.

7. The wire grid polarizer of any of Claims 1 to 5 wherein the surface of each element of the array is an inner surface proximate to the transparent substrate and possesses low reflectance and the opposing surface of each element of the array possesses high reflectance and is an outer surface.

8. The wire grid polarizer of any preceding Claim wherein the material is reflective to light in the visible region of the electromagnetic spectrum.

9. A transmissive display comprising:
a) a light source having a reflective optical cavity configured to randomize direction and polarization of light reflected by the optical cavity;
b) a display module; and
c) a wire grid polarizer device placed between the light source and the display module, comprising:
1) a transparent substrate having an optical property of transmitting electromagnetic waves having a wavelength within the range of ultraviolet, visible and infra-red;
2) an array of spaced-apart, elongated elements, comprised of an electrically conductive and reflective material and disposed on the substrate, sized to interact with electromagnetic waves having a wavelength within the range of ultraviolet, visible and infra-red to generally transmit electromagnetic waves of a first polarization, and generally reflect electromagnetic waves of a second polarization;
wherein each element of the array has a surface and an opposing surface and wherein the surface possesses low reflectance; and
wherein the surface is nearer the display module than the opposing surface.

10. The transmissive display of Claim 9 wherein the display module does not have a rear polarizer.

11. The transmissive display of Claim 9 or Claim 10 wherein the opposing surface of the wire grid polarizer possesses high reflectance.

12. The transmissive display of any of Claims 9 to 11 wherein the array of the wire grid polarizer interacts with electromagnetic waves having a wavelength in the visible region of the electromagnetic spectrum, and the material is reflective to light in the visible region of the electromagnetic spectrum.

13. The transmissive display of any of Claims 9 to 12 wherein the surface of the element of the wire grid polarizer has a reflectance that is less than 0.35.

14. The transmissive display of any of Claims 9 to 13 wherein the opposing surface of the element of the wire grid polarizer has a reflectance that is greater than 0.7.

15. The transmissive display of any of Claims 9 to 14 wherein the surface of each element of the array of the wire grid polarizer is an outer surface and the opposing surface of each element of the array possesses high reflectance and is an inner surface proximate to the transparent substrate.

16. The transmissive display of any of Claims 9 to 14 wherein the surface of each element of the array of the wire grid polarizer is an inner surface proximate to the transparent substrate and the opposing surface of each element of the array of the wire grid polarizer is an outer surface and possesses high reflectance.

17. The transmissive display of any of Claims 9 to 16 further comprising:
d) a geometric structured surface material disposed between the light source and the display module, the structured surface material redirecting a portion of light incident on the structured surface material from an incidence angle to a transmission angle, the transmission angle being less than the incidence angle measured from an axis normal to the plane of the display module.

18. The transmissive display of any of Claims 9 to 17 wherein the display does not contain an absorbing polarizer.
